(19) Europäisches Patentamt
European Patent Office
Office européen des brevets

(11) **EP 4 712 225 A1**

(12) **EUROPEAN PATENT APPLICATION**
published in accordance with Art. 153(4) EPC

(43) Date of publication:
**18.03.2026 Bulletin 2026/12**

(21) Application number: **24891808.8**

(22) Date of filing: **15.11.2024**

(51) International Patent Classification (IPC):
**H01M 50/148** (2021.01)   **H01M 50/105** (2021.01)
**H01M 50/536** (2021.01)   **H01M 50/159** (2021.01)
**H01M 50/169** (2021.01)   **H01M 50/141** (2021.01)
**H01M 50/171** (2021.01)   **H01M 10/658** (2014.01)
**H01M 50/242** (2021.01)

(52) Cooperative Patent Classification (CPC):
**H01M 10/658; H01M 50/105; H01M 50/141;
H01M 50/148; H01M 50/159; H01M 50/169;
H01M 50/171; H01M 50/242; H01M 50/536;
Y02E 60/10**

(86) International application number:
**PCT/KR2024/018080**

(87) International publication number:
**WO 2025/105862 (22.05.2025 Gazette 2025/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.11.2023 KR 20230159301
14.11.2024 KR 20240162452**

(71) Applicant: **LG Energy Solution, Ltd.
Seoul 07335 (KR)**

(72) Inventors:
• **CHOI, Ji Eun
Daejeon 34122 (KR)**

• **KIM, Sang Hun
Daejeon 34122 (KR)**
• **YU, Hyung Kyun
Daejeon 34122 (KR)**
• **LEE, Jae Ho
Daejeon 34122 (KR)**
• **LEE, Ji Sun
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **SECONDARY BATTERY AND CELL STACK COMPRISING SAME**

(57)   The present disclosure is directed to providing a secondary battery with fewer limitations on shape and improved battery capacity, and for preventing problems caused by gas produced during charging and discharging. The secondary battery according to an embodiment of the present disclosure includes an electrode assembly including a plurality of electrodes and a separator stacked parallel to each other, a sheet-type outer packaging having an internal space for accommodating the electrode assembly, and an outer packaging opening configured to communicate the internal space with an outside, and a cap configured to cover the outer packaging opening of the sheet-type outer packaging, wherein a height of the cap in a stack direction of the electrodes and the separator is larger than a height of the electrode assembly.

EP 4 712 225 A1

**(Cont. next page)**

FIG.1

**Description**

## TECHNICAL FIELD

## CROSS-REFERENCE TO RELATED APPLICATIONS

The present application claims priority to Korean Patent Application No. 10-2023-0159301 filed on November 16, 2023 and Korean Patent Application No. 10-2024-0162452 filed on November 14, 2024 in the Republic of Korea, the disclosures of which are incorporated herein by reference.

## TECHNICAL FIELD

The present disclosure relates to a secondary battery and a cell stack including the same, and more particularly, to a secondary battery capable of charging and discharging and a cell stack including the same.

## BACKGROUND ART

Recently, with rising prices of energy sources by the depletion of fossil fuels and growing concerns about environmental pollution, the need for eco-friendly alternative energy sources is the essential factor for the future life. Research has been conducted on a variety of energy generation technologies such as solar, wind and tidal energy and so on, and much attention is paid to energy storage systems including batteries to make use of the produced electrical energy more efficiently.

Moreover, with increasing technology development and growing demand for electronic mobile devices and electric vehicles using batteries, the demand for batteries as an energy source is dramatically increasing, and accordingly many studies are being conducted on batteries that meet diverse needs.

Batteries that store electrical energy may be generally classified into primary batteries and secondary batteries. The primary battery is a disposable battery, whereas the secondary battery is a rechargeable battery manufactured using a material capable of repeated oxidation and reduction between an electric current and a material. That is, when the reduction reaction of the material occurs by the electric current, the charge of power takes place, and when the oxidation reaction of the material occurs, the discharge of power takes place, and in this way, charge and discharge is repeated to produce electricity.

Secondary batteries may be classified into cylindrical cells, pouch cells, prismatic cells and so on, according to the shape. Among them, the pouch cell may be manufactured in such a way that an electrode assembly including a stack of a positive electrode, a negative electrode and a separator is accommodated in a pouch and an outer side portion of the pouch is sealed.

Secondary batteries may be classified into cylindrical cells, pouch cells, prismatic cells and so on, according to the shape. Among them, the pouch cell may be manufactured in such a way that an electrode assembly including a stack of a positive electrode, a negative electrode and a separator is accommodated in a pouch and an outer side portion of the pouch is sealed.

The conventional pouch cell suffers from cracks in a pouch film in a forming process of the pouch film, and in many cases, the pouch film is discarded after a degassing process. Additionally, the forming depth is limited due to the material properties of the pouch film, and accordingly there is a limit to how much the battery capacity can be increased.

Accordingly, there is a need for secondary batteries with fewer limitations on shape and improved battery capacity.

## SUMMARY

## TECHNICAL PROBLEM

The present disclosure is directed to providing a secondary battery with fewer limitations on shape and improved battery capacity, and for preventing problems caused by gas produced during charging and discharging.

## TECHNICAL SOLUTION

A secondary battery according to an embodiment of the present disclosure may include an electrode assembly including a plurality of electrodes and a separator stacked parallel to each other, a sheet-type outer packaging having an internal space for accommodating the electrode assembly, and an outer packaging opening configured to communicate the internal space with an outside, and a cap configured to cover the outer packaging opening of the sheet-type outer packaging, wherein a height of the cap in a stack direction of the electrodes and the separator may be larger than a height of the electrode assembly.

The sheet-type outer packaging may include a coupling portion coupled to the cap, a cover portion disposed closer to the electrode assembly than the coupling portion, and having a surface facing the electrode assembly, and a connection portion disposed between the coupling portion and the cover portion, and having a gradual increase in a gap with the electrode assembly in the stack direction as it is closer to the coupling portion.

The sheet-type outer packaging may have an increasing height of the connection portion in the stack direction as it is closer to the cap.

The sheet-type outer packaging may be coupled to an outer or inner peripheral surface of the cap.

A terminal electrically connected to the electrode assembly may be coupled to the cap.

The cap may include a metal, and the sheet-type outer packaging may have a barrier layer including a metal to be coupled to the cap by welding.

The cap may include a metal, and the sheet-type outer packaging may have a resin layer coupled to the cap by heat and pressure.

The sheet-type outer packaging may have a barrier layer including aluminum (Al) or stainless steel (STS) to prevent moisture infiltration into the electrode assembly.

The sheet-type outer packaging may be coupled to the cap by an adhesive applied between the sheet-type outer packaging and the cap.

When the height of the cap in the stack direction of the electrodes and the separator is L, a thickness of the sheet-type outer packaging is t, and the height of the electrode assembly in the stack direction is h, the secondary battery may satisfy the following Equation (1):

$$L > 2t + h \quad \ldots (1)$$

A cell stack according to an embodiment of the present disclosure may include a plurality of secondary batteries arranged parallel to each other, and a pad disposed between the plurality of secondary batteries to reduce a heat transfer rate between the secondary batteries, wherein the secondary battery may include an electrode assembly including a plurality of electrodes and a separator stacked parallel to each other, a sheet-type outer packaging having an internal space for accommodating the electrode assembly, and an outer packaging opening configured to communicate the internal space with an outside, and a cap configured to cover the outer packaging opening of the sheet-type outer packaging, and wherein a height of the cap in a stack direction of the electrodes and the separator may be larger than a height of the electrode assembly.

When the height of the cap in the stack direction of the electrodes and the separator is L, a thickness of the sheet-type outer packaging is t, and the height of the electrode assembly in the stack direction is h, the cell stack may satisfy the following Equation (1):

$$L > 2t + h \quad \ldots (1)$$

When a thickness of the pad is p, the cell stack may satisfy the following Equation (2):

$$p \leq L - (2t + h) \quad \ldots (2)$$

The pad may be configured to change a shape under pressure by volume expansion of the secondary battery.

A heat transfer rate of the pad may be lower than a heat transfer rate of the sheet-type outer packaging.

A length of the pad may be shorter than a length of the secondary battery on a length direction basis.

The sheet-type outer packaging may include a coupling portion coupled to the cap, and a cover portion disposed closer to the electrode assembly than the coupling portion, and having a surface facing the electrode assembly, and the pad may be disposed in contact with the cover portion.

## ADVANTAGEOUS EFFECTS

Because the secondary battery according to the exemplary embodiment of the present disclosure does not need a forming process of the sheet-type outer packaging, with fewer limitations on the shape in which the sheet-type outer packaging accommodates the electrode assembly, it may be possible to reduce the likelihood that defects such as cracks will occur in the sheet-type outer packaging, and improve battery capacity.

Additionally, when gas is produced inside by charging and discharging, the shape change may be minimized by the internal allowance space.

Additionally, structural stability of the secondary battery may be improved by the connection relationship and placement of the sheet-type outer packaging and the cap.

Moreover, the secondary battery may be efficiently electrically connected to the outside by the terminal coupled to the cap.

The cell stack according to the exemplary embodiment of the present disclosure may minimize heat transfer between the adjacent secondary batteries by the pad disposed in the allowance space between the plurality of secondary batteries.

Additionally, it may be possible to minimize the shape change of the cell stack caused by swelling of the secondary battery.

The effects according to the present disclosure are not limited by the foregoing description, and these and other effects are included in the specification.

## BRIEF DESCRIPTION OF THE DRAWINGS

FIG. 1 is a perspective view schematically showing a secondary battery according to Embodiment 1 of the present disclosure.
FIG. 2 is an exploded perspective view schematically showing a secondary battery according to Embodiment 1 of the present disclosure.
FIG. 3 is a schematic cross-sectional of FIG. 1, taken along the line A-A'.
FIG. 4 is a side view schematically showing a conventional cell stack.
FIG. 5 is a side view schematically showing a cross section of a cell stack according to Embodiment 2 of the present disclosure.

## DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings and rather, should be interpreted based on the meanings and concepts corresponding to the technical aspect of the present disclosure on the basis of the principle that the inventor is allowed to define the terms appropriately for the best explanation.

### Embodiment 1

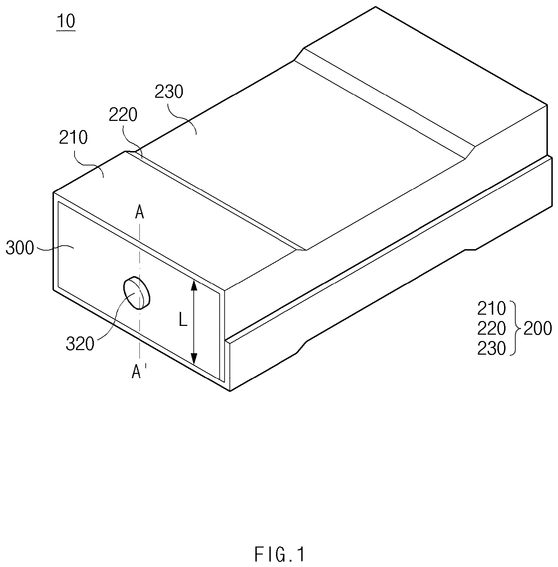

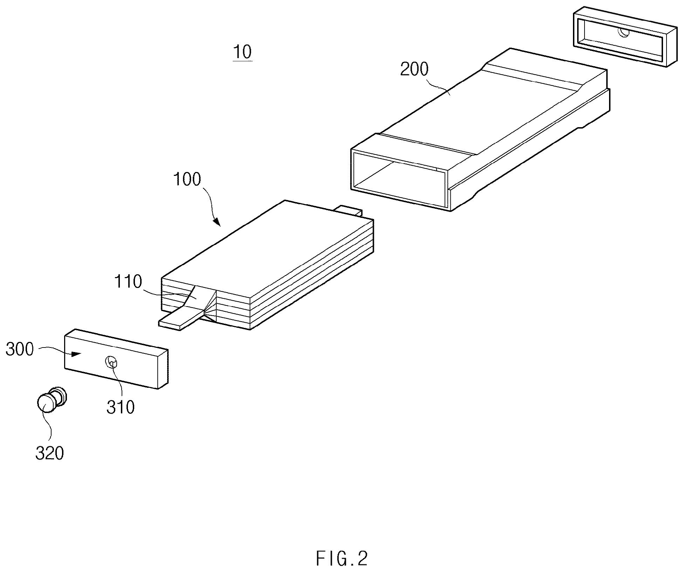

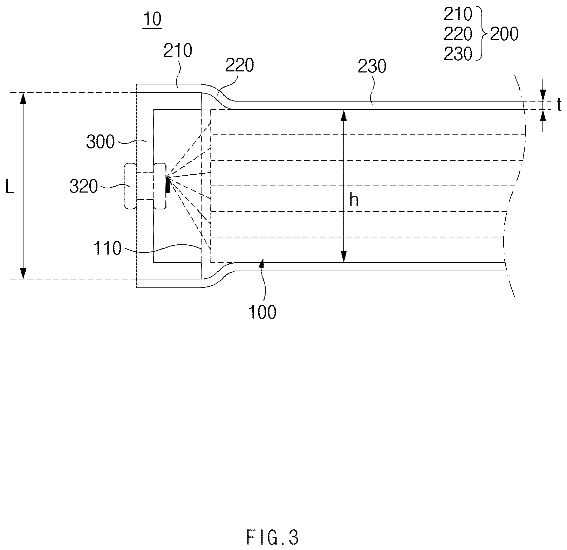

FIG. 1 is a perspective view schematically showing a secondary battery 10 according to Embodiment 1 of the present disclosure. Additionally, FIG. 2 is an exploded perspective view schematically showing the secondary battery 10 according to Embodiment 1 of the present disclosure, and FIG. 3 is a schematic cross-sectional of FIG. 1, taken along the line A-A'.

The secondary battery 10 according to Embodiment 1 of the present disclosure may include an electrode assembly 100, a sheet-type outer packaging 200, and a cap 300. Hereinafter, each component of the secondary battery 10 will be described in more detail. For reference, the description of Embodiment 1 may be equally applied to the following embodiment provided that there is no contradiction between them.

### Electrode assembly

The electrode assembly 100 of the secondary battery 10 may include a positive electrode, a negative electrode, and a separator. Here, the separator may be interposed between the positive electrode and the negative electrode to physically separate the positive electrode from the negative electrode. The electrode assembly 100 may include a stack-type electrode assembly in which the positive electrode, the negative electrode, and the separator are stacked, or a jellyroll-type electrode assembly in which the positive electrode, the negative electrode, and the separator are wound.

Meanwhile, the electrode assembly 100 may include an electrode tab 110 connected to the electrode. The electrode tab 110 may be separately provided, or may be provided as a part of a current collector that constitutes the electrode. For reference, in the case of an all-solid-state battery, the electrode assembly 100 may include a solid electrolyte, instead of the separator.

The electrode assembly 100 may be electrically connected to a terminal 320 as described below. The terminal 320 may be connected to the electrode tab 110 and exposed to the outside of the cap 300 as described below. That is, the electrode assembly 100 of the secondary battery 10 may be electrically connected to the outside by the terminal 320.

### Sheet-type outer packaging

Referring to FIG. 1, the secondary battery 10 according to Embodiment 1 of the present disclosure may include the sheet-type outer packaging 200. The sheet-type outer packaging 200 of the secondary battery 10 may be configured to cover a part of the electrode assembly 100. Specifically, the sheet-type outer packaging 200 may be configured to cover the cap 300 as described below and the electrode assembly 100. More specifically, the sheet-type outer packaging 200 may be coupled to the cap 300 to form an internal space, and the electrode assembly 100 may be accommodated in the internal space.

Meanwhile, Embodiment 1 of the present disclosure is described, taking the sheet-type outer packaging 200 coupled to the outer peripheral surface of the cap 300 as an example. However, this is provided by way of example, and the sheet-type outer packaging 200 may be coupled to the inner peripheral surface of the cap 300.

The sheet-type outer packaging 200 of the secondary battery 10 may have a shape in which a sheet or a film encloses the side of the electrode assembly 100. That is, the sheet-type outer packaging 200 may be disposed to cover the side portion of the electrode assembly 100. In this instance, the sheet-type outer packaging 200 may be disposed to cover the electrode assembly 100 such that one end and the other end meet. In relation to the shape in which one end and the other end of the sheet-type outer packaging 200 meet, one surface of one end and the other surface of the other end may be coupled in contact with each other (see FIG. 1). This is provided by way of example, and the coupling of one end and the other end of the sheet-type outer packaging 200 to form the space for accommodating the electrode assembly 100 may come in different shapes.

In relation to the method whereby one end and the other end of the sheet-type outer packaging 200 are coupled, one end and the other end of the sheet-type outer packaging 200 may be coupled to each other by sealing by heat or sealing by heat and pressure. That is, the sheet-type outer packaging 200 may include a material having good sealing ability by heat.

As an example of the structure of the sheet-type outer packaging 200, the sheet-type outer packaging 200 may be formed in a film shape. Specifically, the sheet-type outer packaging 200 may comprise a plurality of layers including a sealant layer, a barrier layer, and an insulation layer. More specifically, the sheet-type outer packaging 200 may include the sealant layer, the barrier layer, and the insulation layer arranged in that order from the inside close to the electrode assembly 100.

The sealant layer may include a material having good sealing ability by heat to couple one end and the other end of the sheet-type outer packaging 200. For example, the sealant layer of the sheet-type outer packaging 200 may include at least one selected from the group consisting of polyethylene, polypropylene, polycarbonate, polyethyleneterephthalate, polyvinyl chloride, acrylic polymer, polyacrylonitrile, polyimide, polyamide, cellulose, aramid, nylon, polyester, polyparaphenylenebenzobisoxazole, polyarylate, Teflon, and glass fibers. Usually, polyolefin-based resin such as polypropylene (PP) or polyethylene (PE) may be used. In particular, polypropylene (PP) may have high mechanical properties such as tensile strength, stiffness, surface hardness, abrasion resistance and heat resistance and high chemical properties such as corrosion resistance.

The barrier layer may include a metal. For example, the metal of the barrier layer may include at least one selected from the group consisting of iron (Fe), carbon (C), chrome (Cr), manganese (Mn), nickel (Ni) and aluminum (Al). As an example, the barrier layer may include stainless steel (STS). Additionally, the barrier layer may be made of an alloy such as an aluminum alloy.

The insulation layer may include an insulating material. That is, the electrode assembly 100 may be insulated from the outside by the insulation layer. Accordingly, the insulation layer may prevent a short circuit of the sheet-type outer packaging 200. For example, the insulation layer may include at least one selected from the group consisting of polyethylene, polypropylene, polycarbonate, polyethyleneterephthalate, polyvinyl chloride, acrylic polymer, polyacrylonitrile, polyimide, polyamide, cellulose, aramid, nylon, polyester, polyparaphenylenebenzobisoxazole, polyarylate, Teflon and glass fibers. Usually, polymer having abrasion resistance and heat resistance such as nylon resin or polyethyleneterephthalate (PET) may be used.

Meanwhile, the secondary battery 10 may be disposed such that the sheet-type outer packaging 200 covers a part of the electrode assembly 100, and the cap 300 covers the remaining part of the electrode assembly 100. Specifically, when the sheet-type outer packaging 200 is disposed to cover the electrode assembly 100 along the side of the electrode assembly 100, an outer packaging opening may be formed at two ends of the electrode assembly 100. The cap 300 of the secondary battery 10 may be coupled to the sheet-type outer packaging 200 such that it covers the outer packaging openings at the two ends of the electrode assembly 100, and the electrode assembly 100 may be accommodated in the internal space formed by the sheet-type outer packaging 200 and the cap 300.

The sheet-type outer packaging 200 may be coupled to the cap 300. As an example of the coupling method of the cap 300 and the sheet-type outer packaging 200, the cap 300 and the sheet-type outer packaging 200 may be coupled by welding. Specifically, the cap 300 may include a metal, and the sheet-type outer packaging 200 may include the barrier layer that may be coupled to the cap 300 by welding at the area of contact with the cap 300. Here, the barrier layer may include the metal as described above.

As another example of the coupling method of the cap 300 and the sheet-type outer packaging 200, the cap 300 and the sheet-type outer packaging 200 may be coupled by sealing. Specifically, the sheet-type outer packaging 200 may include a resin layer that may be coupled to the cap 300 by heat and pressure at the area of contact with the cap 300. Additionally, the cap 300 may include a resin material having adhesive properties by heat. Here, the resin layer may include the material having good sealing ability by heat as described above.

As still another example of the coupling method of the cap 300 and the sheet-type outer packaging 200, the cap 300 and the sheet-type outer packaging 200 may be coupled through an adhesive. In this instance, the adhesive may be applied between the cap 300 and the sheet-type outer packaging 200. Here, the adhesive for coupling may come in different types and coating methods.

The conventional pouch cell has a cup portion for accommodating the electrode assembly 100 by forming of a sheet or film. In the forming process of the cup portion, the forming depth is limited according to the material properties of the sheet or film, and capacity for accommodating the electrode assembly 100 is also limited. Additionally, when forming the sheet or film, the thickness at the corner is smallest, often causing defects such as cracks. Moreover, the conventional pouch cell needs a gas collector portion to collect gas in a degassing process to remove gas build up in the pouch, and a large part of the gas collector portion is removed and discarded after the degassing process.

In contrast, because the secondary battery 10 according to Embodiment 1 of the present disclosure may include the sheet-type outer packaging 200 suitable for the volume of the electrode assembly 100, there may be no limitation on the capacity for accommodating the electrode assembly 100. Additionally, the need for the forming of the cup portion is eliminated, thereby preventing defects such as cracks in the sheet-type outer packaging 200, and selecting the material or thickness of the sheet-type outer packaging 200 relatively freely. Moreover, electrolyte injection and degassing may be performed through the cap 300, thereby avoiding the waste of the sheet-type outer packaging 200, resulting in improved economical efficiency of the process.

Meanwhile, the electrolyte solution may be accommodated in the secondary battery 10 together with the electrode assembly 100. In this instance, remaining moisture of the electrolyte solution in the secondary battery 10 or moisture infiltrated from the outside may react with the lithium salt to produce hydrogen fluoride (HF), and gas such as carbon dioxide, carbon monoxide, ethylene, methane and so on may be produced by decomposition of the electrolyte solution. Additionally, hydrogen and HF may be additionally produced according to the material of the positive electrode included in the electrode assembly, and during charging and discharging, overheating may occur due to overcharge and an internal short circuit. Accordingly, a large amount of gas may be produced in the secondary battery 10. Due to the gas, the internal pressure of the secondary battery 10 may rise, and swelling in the sheet-type outer packaging 200 or venting in parts of the sheet-type outer packaging 200 or the cap 300 may occur by the increased pressure.

As an example of configuration for minimizing the shape change by the internal gas, the sheet-type outer packaging 200 of the secondary battery 10 according to Embodiment 1 of the present disclosure may include a coupling portion 210, a connection portion 220, and a cover portion 230.

Referring to FIGS. 1 to 3, the coupling portion 210 of the sheet-type outer packaging 200 may be coupled to the cap 300. As described above, the sheet-type outer packaging 200 may be coupled to the cap 300 to form the internal space for accommodating the electrode assembly 100. In this instance, the coupling portion 210 may be a part of the sheet-type outer packaging 200 that is coupled to the cap 300.

The cover portion 230 of the sheet-type outer packaging 200 may be closer to the electrode assembly 100 than the coupling portion 210, and may have one surface facing the electrode assembly 100. The process of manufacturing the secondary battery 10 may include an activation process to impart electrical properties to the secondary battery 10 through charging and discharging. Gas may be produced from the secondary battery 10 through the activation process, and build up in the secondary battery 10. Accordingly, the process of manufacturing the secondary battery 10 may further include the degassing process to remove gas build up in the secondary battery 10. The secondary battery 10 may turn approximately into vacuum through the degassing process. That is, the cover portion 230 of the sheet-type outer packaging 200 may be disposed in close contact with the electrode assembly 100 by the degassing process. Preferably, the cover portion 230 may be disposed with one surface in contact with the electrode assembly 100.

The connection portion 220 of the sheet-type outer packaging 200 may be disposed between the coupling portion 210 and the cover portion 230. That is, the coupling portion 210 and the cover portion 230 may be connected to each other by the connection portion 220. The shape of the connection portion 220 will be described in more detail, together with the shape of the cap 300.

Cap

The cap 300 of the secondary battery 10 may be coupled to the sheet-type outer packaging 200 and configured to cover the electrode assembly 100. Specifically, the cap 300 may be disposed to close the outer packaging opening formed by the sheet-type outer packaging 200.

As an example of configuration for minimizing the shape change by the internal gas, the height of the cap 300 of the secondary battery 10 according to Embodiment 1 of the present disclosure may be larger than the height of the electrode assembly 100. Here, the height of the cap 300 may refer to a length in the stack direction of the electrode and the separator of the electrode assembly 100 (for example, the top-bottom direction on the basis of FIG. 3). In relation to this, the connection portion 220 of the sheet-type outer packaging 200 may be configured such that the gap with the electrode assembly 100 in the stack direction gradually increases as it is closer to the coupling portion 210. Specifically, the sheet-type outer packaging 200 may be configured such that the height of the connection portion 220 in the stack direction increases as it is closer to the cap 300.

Referring to FIG. 3, due to a height difference between the electrode assembly 100 and the cap 300, the connection portion 220 may be disposed such that the height increases as it is closer to the cap 300. Additionally, due to the height difference between the cap 300 and the electrode assembly 100, there may be a height difference between the coupling portion 210 and the cover portion 230 of the sheet-type outer packaging 200.

Preferably, the secondary battery 10 according to Embodiment 1 of the present disclosure may satisfy the following Equation (1) when the height of the cap 300 in the stack direction of the electrode and the separator is L, the thickness of the sheet-type outer packaging 200 is t, and the height of the electrode assembly 100 in the stack direction is h.

$$L > 2t + h \quad \cdots (1)$$

Accordingly, the secondary battery 10 may have an allowance height as much as L - (2t + h). That is, when gas is produced in the secondary battery 10 during charging and discharging, the internal gas may build up in an allowance space by the allowance height.

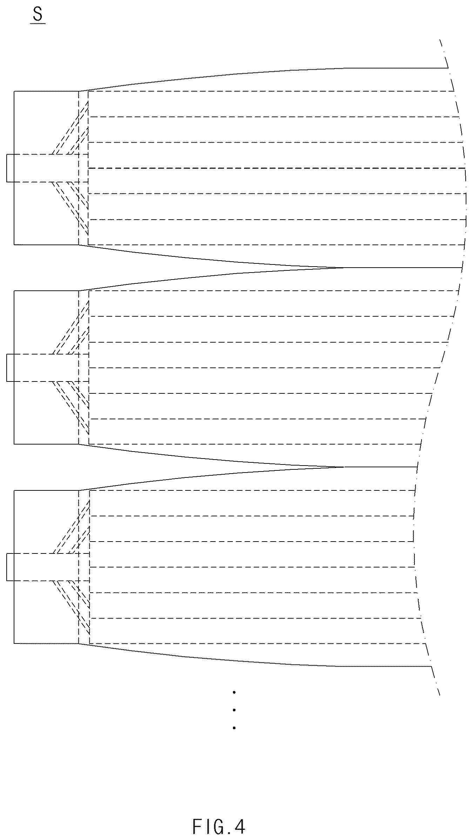

FIG. 4 is a side view schematically showing the conventional cell stack S.

Referring to FIG. 4, the conventional secondary battery may swell in the surface immediately by gas. Accordingly, the conventional cell stack S including a plurality of secondary batteries may change in the placement of the secondary batteries by swelling. As shown in FIG. 4, when the secondary battery swells in the surface by swelling, the cell stack S may be structurally unstable. That is, the conventional battery module including the cell stack S reduces in structural stability while in use.

In contrast, the secondary battery 10 according to Embodiment 1 of the present disclosure may reduce swelling in the surface. Accordingly, structural stability of the secondary battery 10 may be improved. Further, the occurrence of gap between the caps 300 may be reduced by the allowance space. Accordingly, structural stability of a battery module including the plurality of secondary batteries 10 may be improved.

Meanwhile, the cap 300 may have a coupling hole 310. The terminal 320 may be coupled to the coupling hole 310. The electrode tab 110 of the electrode assembly 100 may be coupled to one side of the terminal 320. They may be welded to each other, but the coupling structure between the terminal 320 and the electrode tab 110 is not particularly limited.

The coupling hole 310 may have a shape that passes through from one surface of the cap 300 to the other surface. For connection between the electrode assembly 100 and the outside, the terminal 320 may pass through the coupling hole 310. That is, the terminal 320 may be extended from one surface of the cap 300 to the other surface.

The terminal 320 may have a rivet shape to prevent it from being separated from the cap 300. However, the terminal 320 is not limited to a particular structure or shape, and may have any structure or shape for electrical conduction between the electrode assembly 100 and the outside.

Embodiment 2

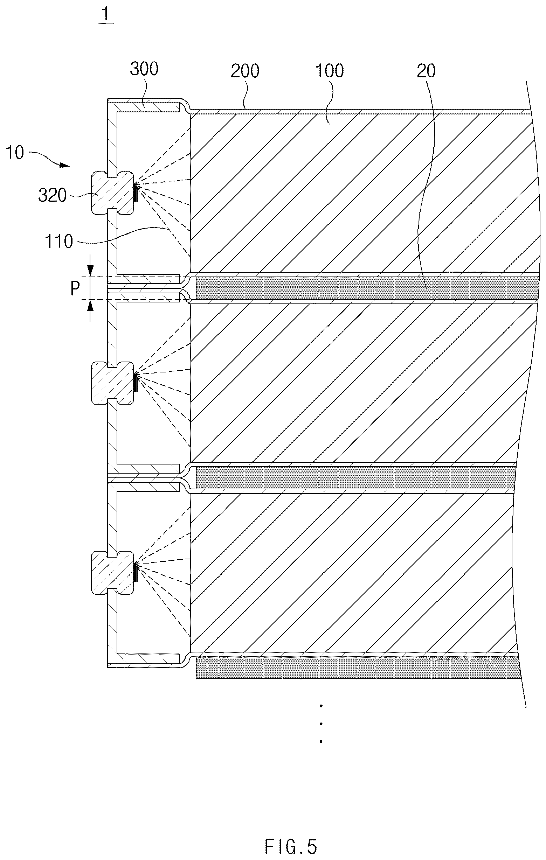

FIG. 5 is a cross-sectional view schematically showing the side of a cell stack 1 according to Embodiment 2 of the present disclosure.

Hereinafter, a detailed description of the same configuration as that of the secondary battery 10 according to Embodiment 1 of the present disclosure is omitted.

The cell stack 1 according to Embodiment 2 of the present disclosure may include a plurality of secondary batteries 10 and a pad 20. The secondary batteries 10 may be arranged parallel to each other, and the pad 20 may be disposed between the secondary batteries 10. Specifically, each pad 20 may be disposed between the adjacent secondary batteries 10.

The secondary battery 10 of the cell stack 1 may include the electrode assembly 100, the sheet-type outer packaging 200, and the cap 300. Here, the height of the cap 300 in the stack direction of the electrode and the separator of the electrode assembly 100 may be larger than the height of the electrode assembly 100. Specifically, when the height of the cap 300 in the stack direction of the electrode and the separator is L, the thickness of the sheet-type outer packaging 200 is t, and the height of the electrode assembly 100 in the stack direction of the electrode and the separator is h, the secondary battery 10 may satisfy the following Equation (1).

$$L > 2t + h \quad \ldots (1)$$

Meanwhile, the sheet-type outer packaging 200 of the secondary battery 10 may include the coupling portion 210, the connection portion 220, and the cover portion 230. Each component of the sheet-type outer packaging 200 may be the same as Embodiment 1 of the present disclosure, and its detailed description is omitted.

The cell stack 1 may include the pad 20 disposed in the space formed between the secondary batteries 10 by the height difference between the cap 300 and the electrode assembly 100 of the secondary battery 10.

The pad 20 of the cell stack 1 may reduce the heat transfer rate between the secondary batteries 10. That is, the heat transfer rate of the pad 20 may be lower than the heat transfer rate of the secondary battery 10. Specifically, the heat transfer rate of the pad 20 may be lower than the heat transfer rate of the sheet-type outer packaging 200 of the secondary battery 10. More specifically, the pad 20 may be made of a material having a lower heat transfer rate than the material of the sheet-type outer packaging 200.

The cell stack 1 according to Embodiment 2 of the present disclosure may include the pad 20 to reduce the transfer of heat between the secondary batteries 10. Accordingly, it may be possible to prevent flame propagation to the other secondary battery 10 when the specific secondary battery 10 bursts into flames. Accordingly, it may be possible to prevent thermal runaway in the module including the cell stack 1, and improve stability of the module.

Hereinafter, the placement of the pad 20 will be described in more detail.

In the height direction (for example, the top-bottom direction in FIG. 5), the pad 20 of the cell stack 1 according to Embodiment 2 of the present disclosure may be disposed in the space formed by the height difference between the cap 300 and the electrode assembly 100 of the secondary battery 10. Specifically, when the thickness of the pad 20 is p, the following Equation (2) may be satisfied:

$$p \leq L - (2t + h) \quad \ldots (2)$$

Accordingly, the pad 20 may be disposed between the secondary batteries 10 more efficiently.

In the length direction (for example, the left-right direction in FIG. 5), the length of the pad 20 of the cell stack 1 according to Embodiment 2 of the present disclosure may be shorter than the length of the secondary battery 10. Specifically, the length of the pad 20 may be smaller than a length obtained by subtracting the length of the cap 300 from the length of the secondary battery 10. Accordingly, the pad 20 may be disposed in contact with the cover portion 230 of the sheet-type outer packaging 200.

Meanwhile, the pad 20 may change the shape by pressure. Specifically, the pad 20 may be configured to change the shape under pressure by volume expansion of the secondary battery 10. Accordingly, when the cover portion 230 of the sheet-type outer packaging 200 applies pressure to the pad 20 by gas in the secondary battery 10, the pad 20 may be compressed.

The pad 20 of the cell stack 1 may absorb the pressure that may be transferred to the other secondary battery 10 by gas in the secondary battery 10. Accordingly, structural stability of the cell stack 1 may be improved.

The cell stack 1 according to Embodiment 2 of the present disclosure may have the space between the adjacent secondary batteries 10 by the shape of the secondary battery 10. The pad 20 may be disposed in the space, thereby reducing the transfer of heat and pressure between the adjacent secondary batteries 10. Accordingly, it may be possible to improve stability of the cell stack 1, leading to improved stability of the battery module including the cell stack 1.

Although the present disclosure has been hereinabove described with regard to a limited number of embodiments and drawings, the present disclosure is not limited thereto, and a variety of modifications and change may be made thereto by persons having ordinary skill in the technical field pertaining to the present disclosure within the technical aspect of the present disclosure and the appended claims and their equivalent scope.

[List of Reference Numerals]

    1: Cell stack
    10: Secondary battery
    20: Pad
    100: Electrode assembly
    110: Electrode tab
    200: Sheet-type outer packaging
    210: Coupling portion
    220: Connection portion
    230: Cover portion
    300: Cap
    310: Coupling hole
    320: Terminal
    S: Conventional cell stack

**Claims**

1. A secondary battery comprising:

   an electrode assembly including a plurality of electrodes and a separator stacked parallel to each other;
   a sheet-type outer packaging having an internal space for accommodating the electrode assembly, and an outer packaging opening configured to communicate the internal space with an outside; and
   a cap configured to cover the outer packaging opening of the sheet-type outer packaging, wherein a height of the cap in a stack direction of the electrodes and the separator is larger than a height of the electrode assembly.

2. The secondary battery according to claim 1, wherein the sheet-type outer packaging includes:

   a coupling portion coupled to the cap;
   a cover portion disposed closer to the electrode assembly than the coupling portion, and having a surface facing the electrode assembly; and
   a connection portion disposed between the coupling portion and the cover portion, and having a gradual increase in a gap with the electrode assembly in the stack direction as it is closer to the coupling portion.

3. The secondary battery according to claim 2, wherein the sheet-type outer packaging has an increasing height of the connection portion in the stack direction as it is closer to the cap.

4. The secondary battery according to claim 1, wherein the sheet-type outer packaging is coupled to an outer or inner peripheral surface of the cap.

5. The secondary battery according to claim 1, wherein a terminal electrically connected to the electrode assembly is coupled to the cap.

6. The secondary battery according to claim 1,

   wherein the cap includes a metal, and
   wherein the sheet-type outer packaging has a barrier layer including a metal to be coupled to the cap by welding.

7. The secondary battery according to claim 1,

   wherein the cap includes a metal, and
   wherein the sheet-type outer packaging has a resin layer coupled to the cap by heat and pressure.

**8.** The secondary battery according to claim 7, wherein the sheet-type outer packaging has a barrier layer including aluminum (Al) or stainless steel (STS) to prevent moisture infiltration into the electrode assembly.

**9.** The secondary battery according to claim 1, wherein the sheet-type outer packaging is coupled to the cap by an adhesive applied between the sheet-type outer packaging and the cap.

**10.** The secondary battery according to claim 1, wherein when the height of the cap in the stack direction of the electrodes and the separator is L, a thickness of the sheet-type outer packaging is t, and the height of the electrode assembly in the stack direction is h, the following Equation (1) is satisfied:

$$L > 2t + h \quad \dots (1)$$

**11.** A cell stack comprising:

a plurality of secondary batteries arranged parallel to each other; and
a pad disposed between the plurality of secondary batteries to reduce a heat transfer rate between the secondary batteries,
wherein the secondary battery includes:

an electrode assembly including a plurality of electrodes and a separator stacked parallel to each other;
a sheet-type outer packaging having an internal space for accommodating the electrode assembly, and an outer packaging opening configured to communicate the internal space with an outside; and
a cap configured to cover the outer packaging opening of the sheet-type outer packaging, and
wherein a height of the cap in a stack direction of the electrodes and the separator is larger than a height of the electrode assembly.

**12.** The cell stack according to claim 11, wherein when the height of the cap in the stack direction of the electrodes and the separator is L, a thickness of the sheet-type outer packaging is t, and the height of the electrode assembly in the stack direction is h, the following Equation (1) is satisfied:

$$L > 2t + h \quad \dots (1)$$

**13.** The cell stack according to claim 12, wherein when a thickness of the pad is p, the following Equation (2) is satisfied:

$$p \leq L - (2t + h) \quad \dots (2)$$

**14.** The cell stack according to claim 11, wherein the pad is configured to change a shape under pressure by volume expansion of the secondary battery.

**15.** The cell stack according to claim 11, wherein a heat transfer rate of the pad is lower than a heat transfer rate of the sheet-type outer packaging.

**16.** The cell stack according to claim 11, wherein a length of the pad is shorter than a length of the secondary battery on a length direction basis.

**17.** The cell stack according to claim 11, wherein the sheet-type outer packaging includes:

a coupling portion coupled to the cap; and
a cover portion disposed closer to the electrode assembly than the coupling portion, and having a surface facing the electrode assembly, and
wherein the pad is disposed in contact with the cover portion.

FIG.1

FIG.2

FIG.3

FIG.4

FIG.5

## INTERNATIONAL SEARCH REPORT

| International application No. |
|---|
| **PCT/KR2024/018080** |

**A. CLASSIFICATION OF SUBJECT MATTER**

**H01M 50/148**(2021.01)i; **H01M 50/105**(2021.01)i; **H01M 50/536**(2021.01)i; **H01M 50/159**(2021.01)i; **H01M 50/169**(2021.01)i; **H01M 50/141**(2021.01)i; **H01M 50/171**(2021.01)i; **H01M 10/658**(2014.01)i; **H01M 50/242**(2021.01)i

According to International Patent Classification (IPC) or to both national classification and IPC

**B. FIELDS SEARCHED**

Minimum documentation searched (classification system followed by classification symbols)

H01M 50/148(2021.01); H01M 10/04(2006.01); H01M 2/02(2006.01); H01M 50/103(2021.01); H01M 50/178(2021.01); H01M 50/211(2021.01); H01M 50/24(2021.01); H01M 50/242(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 조립체(electrode assembly), 시트형 외장재(sheet-type exterior material), 캡(cap), 높이(height)

**C. DOCUMENTS CONSIDERED TO BE RELEVANT**

| Category* | Citation of document, with indication, where appropriate, of the relevant passages | Relevant to claim No. |
|---|---|---|
| X | KR 10-2015-0045240 A (LG CHEM, LTD.) 28 April 2015 (2015-04-28)<br>See paragraphs [0032]-[0046] and figures 1-7. | 1,4,6-8 |
| Y | | 5,9-12,14-16 |
| A | | 2-3,13,17 |
| Y | KR 10-2023-0089378 A (SK ON CO., LTD.) 20 June 2023 (2023-06-20)<br>See paragraphs [0052]-[0055] and figures 1-3. | 5,9 |
| Y | KR 10-2017-0083990 A (SK INNOVATION CO., LTD.) 19 July 2017 (2017-07-19)<br>See paragraphs [0040]-[0045] and figure 2. | 10,12 |
| Y | KR 10-2023-0052657 A (LG ENERGY SOLUTION, LTD.) 20 April 2023 (2023-04-20)<br>See paragraphs [0040] and [0052] and figures 2-3. | 11-12,14-16 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 February 2025** | **19 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/018080** |

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2023-0150242 A (LG ENERGY SOLUTION, LTD.) 30 October 2023 (2023-10-30)<br>See paragraphs [0029]-[0061] and figures 1-6. | 1-17 |

Form PCT/ISA/210 (second sheet) (July 2022)

## INTERNATIONAL SEARCH REPORT
### Information on patent family members

International application No.

**PCT/KR2024/018080**

| Patent document cited in search report | | | Publication date (day/month/year) | Patent family member(s) | | | Publication date (day/month/year) |
|---|---|---|---|---|---|---|---|
| KR | 10-2015-0045240 | A | 28 April 2015 | None | | | |
| KR | 10-2023-0089378 | A | 20 June 2023 | CN | 116264315 | A | 16 June 2023 |
| | | | | US | 2023-0187792 | A1 | 15 June 2023 |
| KR | 10-2017-0083990 | A | 19 July 2017 | KR | 10-2017-0014293 | A | 08 February 2017 |
| KR | 10-2023-0052657 | A | 20 April 2023 | CN | 220753571 | U | 09 April 2024 |
| | | | | DE | 212022000114 | U1 | 21 August 2023 |
| | | | | WO | 2023-063644 | A1 | 20 April 2023 |
| KR | 10-2023-0150242 | A | 30 October 2023 | CN | 112689926 | A | 20 April 2021 |
| | | | | EP | 3893291 | A1 | 13 October 2021 |
| | | | | EP | 3893291 | A4 | 16 February 2022 |
| | | | | EP | 3893291 | B1 | 01 May 2024 |
| | | | | ES | 2985179 | T3 | 04 November 2024 |
| | | | | HU | E067482 | T2 | 28 October 2024 |
| | | | | JP | 2022-506014 | A | 17 January 2022 |
| | | | | JP | 2023-090943 | A | 29 June 2023 |
| | | | | JP | 7297062 | B2 | 23 June 2023 |
| | | | | KR | 10-2020-0106378 | A | 14 September 2020 |
| | | | | PL | 3893291 | T3 | 08 July 2024 |
| | | | | US | 2022-0037714 | A1 | 03 February 2022 |
| | | | | US | 2024-0039073 | A1 | 01 February 2024 |
| | | | | US | 2024-0186608 | A1 | 06 June 2024 |
| | | | | US | 2024-0186609 | A1 | 06 June 2024 |
| | | | | US | 2024-0186610 | A1 | 06 June 2024 |
| | | | | WO | 2020-180114 | A1 | 10 September 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230159301

- KR 1020240162452